Europäisches Patentamt

European Patent Office

Office européen des brevets

(11) Publication number: **0 422 894 A2**

# EUROPEAN PATENT APPLICATION

(21) Application number: 90311050.0

(22) Date of filing: 09.10.90

(51) Int. Cl.⁵: **B60P 1/64**

(30) Priority: 09.10.89 GB 8922674

(43) Date of publication of application:
**17.04.91 Bulletin 91/16**

(84) Designated Contracting States:
**AT BE CH DE DK ES FR GB GR IT LI LU NL SE**

(71) Applicant: **Kent, Frederick Henry Howard**
**2-3 Gloucester Street**
**Brighton, East Sussex BN1 4EW(GB)**

Applicant: **Freelove, Alan John**
**Golding Barn Farm Industrial Estate,**
**Henfield Road**
**Small Dole, West Sussex, BN5 9XH(GB)**

(72) Inventor: **Kent, Frederick Henry Howard**
**2-3 Gloucester Street**
**Brighton, East Sussex BN1 4EW(GB)**
Inventor: **Freelove, Alan John**
**Golding Barn Farm Industrial Estate,**
**Henfield Road**
**Small Dole, West Sussex, BN5 9XH(GB)**

(74) Representative: **Davies, Christopher Robert et al**
**Frank B. Dehn & Co. Imperial House 15-19**
**Kingsway**
**London WC2B 6UZ(GB)**

(54) **Container vehicle.**

(57) A lorry (1) for transporting a container (2) is provided with front and rear pivotal track portions (9b,9c) which extend horizontally outwardly from its sides during loading or unloading of the container (2). The pivotal track portions (9b,9c) are supported by arms (28) and legs (29), and connect with fixed track portions (9a) mounted on the lorry (1). The container (2) is moved between a position above the lorry (1) to a position to the side of the lorry (1) by a framework (6) which suspends the container (2) by chains (7) and cables (18,19) and which is moved along the track portions (9a,9b,9c) by motors (14) provided at each of its ends.

Fig.3

EP 0 422 894 A2

# CONTAINER VEHICLE

The present invention relates to vehicles or trailers of the type which may be provided with either a container or a load supporting base, into or onto which goods etc may be loaded for transportation.

Lorries and vans having integral container bodies into which goods are loaded for storage during transport, such as for example furniture removal lorries, are well known, but suffer from the disadvantage that the whole lorry or van itself, as well as the driver, must stand idle while the container body is loaded with or unloaded of its contents. Thus, neither the driver's ability nor the lorry or van are used to their full capacity. Articulated lorries with detachable trailers also suffer to an extent from the same disadvantages in that the entire trailer (which itself is relatively costly) must stand idle during loading and unloading, with only the powered tractor being available for other operations during this time.

Lorries used in conjunction with ships or trains generally for the purpose of transporting goods over long distances are known which have container bodies that are removable from the wheel base. However, these lorries may only be loaded with or unloaded of their containers at specific locations, such as container ports, where special loading and unloading apparatus is available. They are not therefore suitable for more general purposes or for use in furniture removal.

Vehicles have been proposed in which a container is lifted to one side of the wheel base and lowered to the ground by means of a pivotal hydraulic mechanism. However, with such a system acceptably controlled movement of the container is difficult to achieve.

According to the present invention, there is provided a vehicle for transporting a container or load supporting base, wherein said vehicle is provided with:
track means, provided adjacent each end of the vehicle and arranged to extend, in use, substantially horizontally outwardly from a side of said vehicle;
ground engaging support means for supporting said track means in said substantially horizontal position;
frame means movable along said track means for conveying a container or base between a position over said vehicle and a position to one side of said vehicle;
and lifting means provided on said frame means for raising and lowering said container or base.

To unload the container or base, the frame means moves it to one side of the vehicle and the lifting means lowers it to the ground. To load the container or base, the frame means is positioned over it, the lifting means raises it, and the frame means moves it to a position over the vehicle where it is then lowered into place.

Thus, a vehicle in accordance with the present invention may deliver a container to any required location, not limited to a specific site where loading or unloading apparatus is available, and may leave the container to be loaded or unloaded, the vehicle then being free during this time to transport, deliver or collect different containers at other locations. In this way the vehicle and the driver are used to their full capacity, and a number of containers are able to be associated with a single vehicle and one driver. This, of course, enables a large saving to be made on equipment and labour costs, since each driver is used to his full capacity and a container is much less expensive than a complete vehicle in both initial outlay and servicing.

The present invention is particularly useful when applied to furniture removal lorries due to the length of time involved in loading the furniture into the container. Further it allows for cheaper DIY removals, whereby instead of having to hire a whole lorry a customer need only hire a container which he can load and unload in his own time, merely calling on a driver and vehicle for the actual move.

Furthermore, the fact that the container is moved along substantially horizontal tracks and may thus be lowered more or less vertically to the ground without any pivotal motion means that the container movement is highly controllable. Therefore, there is less chance that the container will swing around when being loaded or unloaded, and consequently less chance of any goods stored in the container being damaged. Furthermore, the preferred vehicle can be used on somewhat sloped ground and the term "substantially horizontal" for the track means is intended to encompass this.

Containers of the type discussed above are often provided with a load supporting container base which may be detached from the protective side walls and roof of the container. In this case and as indicated above, a vehicle in accordance with the invention may be used to transport goods on a container base alone or on other load supporting bases, the base being movable onto and off of the vehicle for loading or unloading as desired. Moreover, the term "vehicle" should be taken to include reference to a trailer for a vehicle, as clearly the apparatus described could be mounted on a trailer.

The track means could comprise a pair of front and rear tracks mounted on one or each side the vehicle, and the support means could comprise integral ground engaging supporting legs, both means being adapted to pivot outwardly in a horizontal plane from a position along the side of the vehicle to a position extending horizontally outwardly therefrom. Preferably, however, the track means comprises front and rear fixed horizontally extending track portions mounted on said vehicle, and front and rear pivotal track portions mounted adjacent the respective fixed track portions and pivotable between an upright position and a substantially horizontal position. In this case, opposed pivotal track portions may be provided adjacent each end of the fixed track portions so that a container or base can be loaded or unloaded from either side of the vehicle, actuating means being provided for moving one of each said pair of opposed track portions into its upright or horizontal position, whilst said other one of said pair of opposed track portions is held in its upright position.

Preferably, the support means comprises support arms extendable outwardly from said vehicle to a position in which said arms will, in use, lie beneath and support the track means in their horizontal positions, said arms being provided with ground engaging support legs adjacent their free ends. The support arms, when not in use, may be housed substantially across the width of the vehicle chassis and may be adapted to slide outwardly from the side of the chassis when in use.

In the above arrangement the tracks may be adapted to engage the container or frame means when in their substantially vertical positions so as to restrain the container or frame means from movement during transportation.

Preferably, the frame means comprises a framework which straddles the container or base in the lengthwise direction of the vehicle, but it could also take other forms. For example, it could comprise a pair of independent front and rear supporting structures, each said supporting structure having its own lifting means.

The movement of the track means, frame means and lifting means may all be manual but are preferably automatic. The support means may be driven hydraulically. In the case where pivotal tracks are mounted on both sides of the lorry each pivotal track may be connected to the pivotal track positioned on the opposite side of the vehicle to it by an actuator, whereby means are provided for locking either of the opposed pivotal tracks in its substantially vertical position, and the actuator may be actuated to push or pull the other pivotal track into its horizontal or vertical position respectively.

The frame means may be moved long said track means by motors mounted at each end of said frame means, said motors rotating toothed wheels mounted thereon which wheels engage with rack means mounted on said track means.

The motors may be servo-controlled so that they drive the two ends of the frame means at substantially the same speeds, and sensing means may be provided which senses when the frame means is approaching the end of said track means, said sensing means gradually reducing the speed at which said frame means is driven by said motors as said frame means nears the end of said track means, said sensing means further stopping said motors from driving said frame means when said frame means reaches the end of said track means.

The lifting means could be of many different kinds, for example hydraulic, and preferably comprises chains or cables running from a lifting mechanism, said container or base being suspended from said cables or chains when being conveyed by said frame means, and being retained in position on said vehicle by fastening means when said vehicle is moving. Preferably the chains or cables are secured to the bottom corners of the container, whereby the same lifting and frame means for moving the container may be used with a load supporting base without the need for modification.

The frame means may be provided with guide rails for correctly positioning the container in a lengthwise direction in relation to said frame means when in its raised position so that when said container is moved to a position over said vehicle it is correctly aligned with said vehicle.

Further, the frame means may be provided with guide rollers which are movable to lie either side of the vertical side wall edges of the container to prevent the container from swinging around whilst being loaded, unloaded or transported.

The use of guide rails, guide rollers, and servo-controlled motors enables the loading or unloading of a container to be carried out in a controlled manner even if the same is done on a sloped surface, since the guide rails and rollers prevent any swinging of the container, and the servo-controlled motors prevent the frame means from becoming overly distorted due to its ends being driven at different speeds, as may occur if the preferred track portions are at different gradients on account of the slope.

It will be appreciated that when the container is being loaded onto the vehicle on a slope, the guide rollers prevent the container from hanging vertically from the chains or cables and keep it correctly orientated in the transverse direction of the vehicle so that it is correctly aligned with the support bars on the wheel base when being lowered onto them.

An embodiment of the present invention will now be described by way of example only, with reference to the accompanying drawings in which:

Figure 1 is a perspective view of a container lorry in accordance with the present invention;

Figure 2 is a perspective view of the lorry showing track means extending from one side thereof;

Figure 3 is a perspective view of the lorry showing a container being unloaded; and

Figure 4 is a perspective view of the lorry showing the container removed.

Referring to the drawings, a lorry 1 for transporting a container 2 is shown at various stages of unloading.

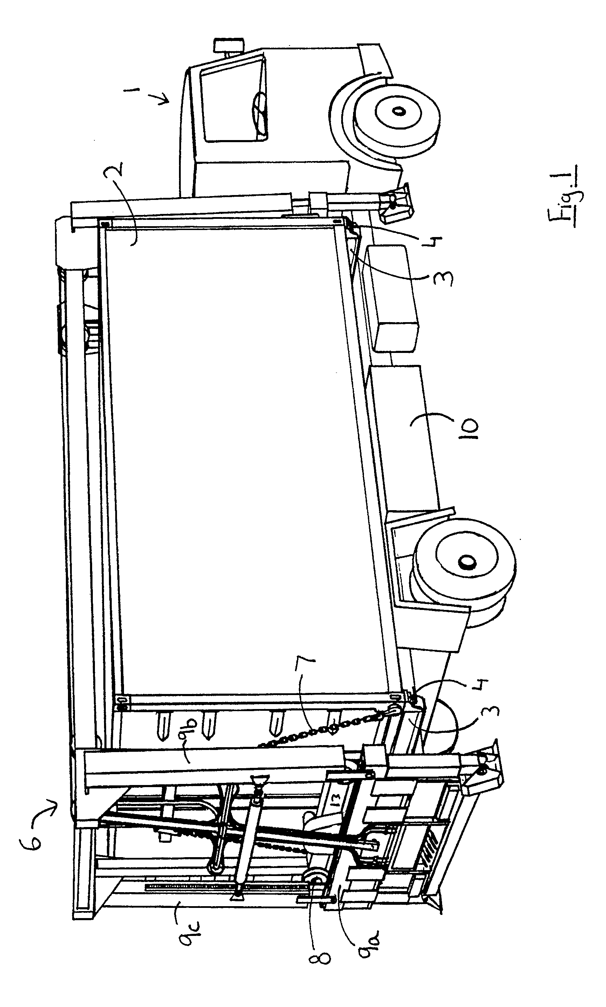

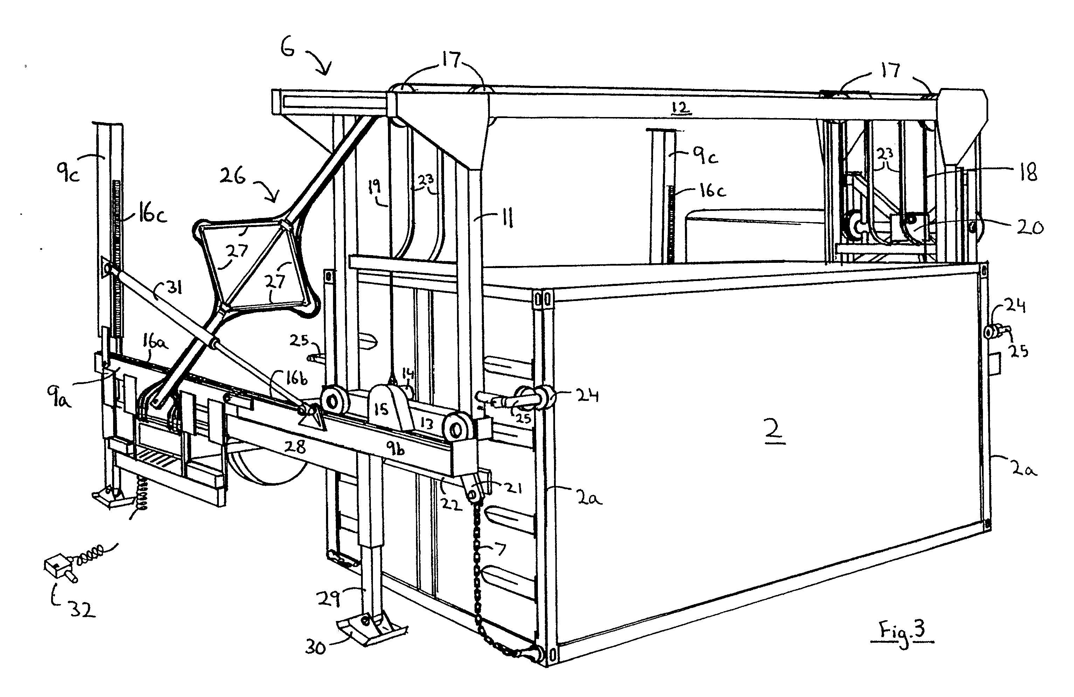

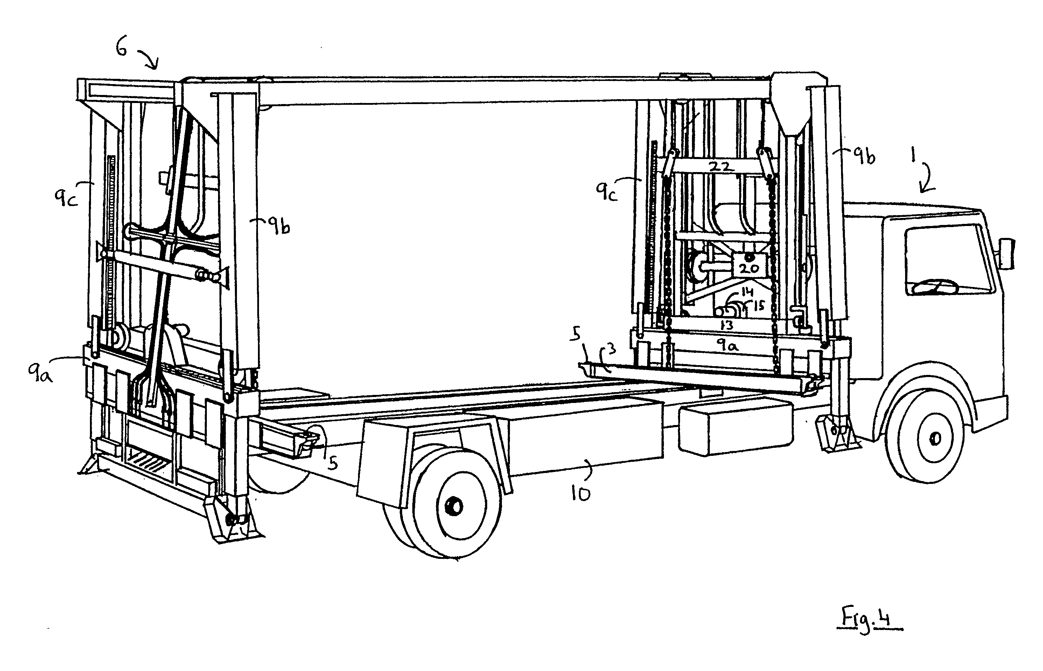

When being transported, the container 2, as shown in figure 1, is supported on the lorry 1 by support bars 3 and is held in position thereon by fastening bolts 4. These bolts 4 are inserted, through holes 5 (see Fig.4) provided in the support bars 3, into fastening holes (not shown) provided in the corners of the container 2. A framework 6 straddles the container and engages it at the front and rear ends by means of chains 7. The framework 6 is mounted on rollers 8 and is restrained from movement at both ends by means of pivotal track portions 9b and 9c which are pivotally mounted to front and rear fixed track portions 9a on which the framework 6 stands. As is described in more detail later, the container 2 may be unloaded to either side of the lorry by lowering the front and rear track portions 9b or 9c so that they project horizontally outwardly from the side of the lorry 1 to form a continuous track with the front and rear fixed track portions 9a. The container 2 is then carried along the tracks by the framework 6 (see Fig. 3) until is clears the lorry wheel base 10, at which point it is lowered to the ground. The container 2 is then unhooked from the framework 6 by detaching the chains 7, and the framework 6 and the track portions 9b or 9c are returned to their original positions, (see Fig. 4).

As can be seen in Figure 3, the framework 6 is composed of two H-members 11 connected to each other by horizontal beams 12 running between the tops of the two H-members 11. Each H-member 11 has a bottom cross bar 13 on which are mounted a pair of rollers 8 and a motor 14. Each motor has a cowling 15, housing a set of toothed gear wheels, which move the framework 6 along the track portions 9a, 9b, and 9c through engagement with racks 16a, 16b, and 16c provided on the track portions 9a, 9b and 9c respectively.

The framework 6 houses a pulley system for raising or lowering the container 2. Pulleys 17 are mounted on top crossbars (not shown) fixed across the horizontal beams 12, and two pairs of support cables 18, 19 run over these pulleys 17 from a hydraulic lifting mechanism 20, which is housed on the H-member 11 nearest the front of the lorry 1.

The two pairs of support cables 18, 19 run to the front and back ends of the container 2 respectively, where each cable is connected to a chain 7 through a bracket 21.

Held between each pair of brackets 21 is a spreader bar 22 for keeping the support cables 18, 19 and also the chains 7, apart. The spreader bar 22 also prevents the cables 18, 19 and chains 7, from being entangled in other parts of the apparatus and provides a surface against which guide rails 23 (referred to later) can act. As said before, the chains 7 are attached to the bottom corners of the container 2 so that it may be raised or lowered.

As can be seen in Figure 3, the framework 6 also includes a pair of guide rails 23 and two pairs of guide rollers 24 at each end. When the container 2 is suspended by the framework 6, the guide rails 23 guide the container 2 into a position in which it will be correctly aligned in its lengthwise direction with the wheel base 10 when lowered onto the lorry 1. Each guide rail 23 comprises a lower curved portion which extends inwards and upwardly from the middle cross-bar of each H-member 11 and a vertical section extending from the curved section upwardly towards the horizontal beams 12. The guide rails 23 allow the driver of the lorry 1 some leeway as to the exact position in which the lorry 1 should be parked when loading the container 2, and also prevent the container 2 from swinging around.

Each pair of guide rollers 24 comprise two rollers arranged perpendicularly to one another on the end of an arm 25, so that when the arm 25 is swung from a vertical to a horizontal position, the rollers 24 lie either side of a side wall vertical edge 2a of the container 2. The rollers 24 again help to guide the container 2 during unloading or loading, and as with the guide rails 23 prevent the container 2 from swinging about.

The hydraulic hoses and other control lines necessary for controlling the operation of the hydraulic lifting means 20, and the motors 14, etc., are fed to the framework 6 along a telescopic arm 26 pivotally connected at one end to the lorry 1 and at the other end to the top of the framework 6. The arm 26 has side arms 27 which expand to form a parallelogram when the arm 26 is extended. Obviously, when the framework 6 is moved to the side of the lorry 1 the arm 26 and the control lines must extend over a greater distance. The use of the telescopic arm 26 and the expansion of the side arms 27 to form a parallelogram prevent the need for large amounts of slack in the control lines which otherwise would be dangerous.

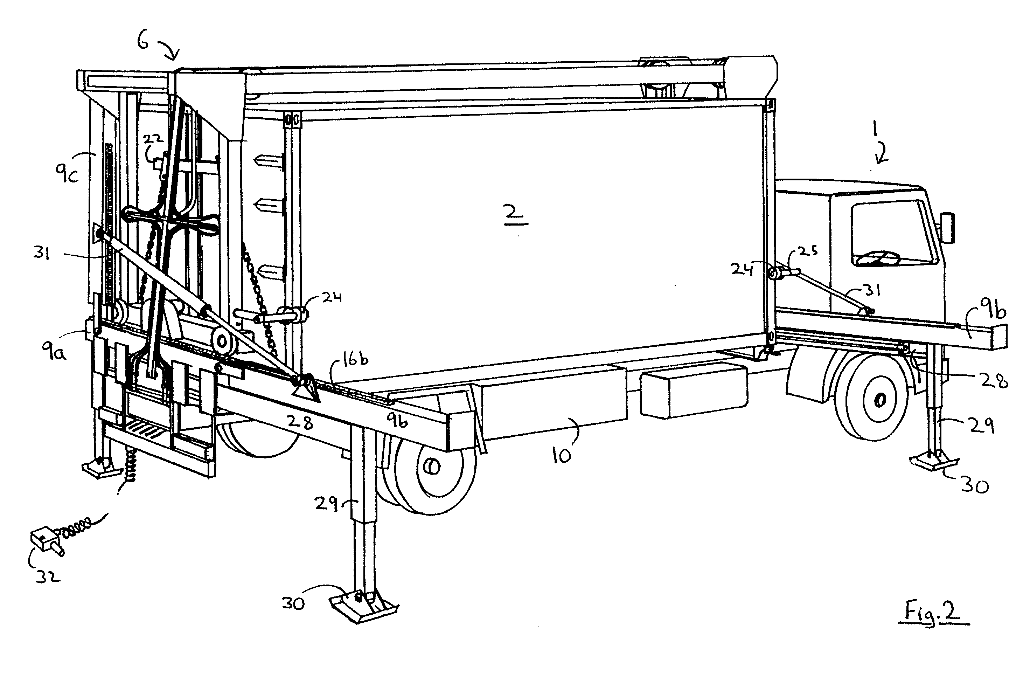

Referring to Figures 2 and 3, a track assembly on which the framework 6 is adapted to run, is provided at each end of the lorry 1. Each assembly consists of support means and track means. Each support means comprises two supporting arms 28 which are adapted to extend outwardly one from either side of the lorry 1 in order to support the track portions 9b or 9c. Each arm 28 has a supporting leg 29 attached to its outwardly facing end and each leg 29 has a stabilizing foot 30 attached to its lower end. The legs 29 may extend telescopically in a known manner until the stabilizing feet 30 firmly contact the ground, to thereby stabilize the lorry 1 and prevent it from leaning or tipping over.

Each track means comprises the three track portions 9a, 9b and 9c and a hydraulic actuator 31. One of the track portions 9a is fixedly mounted on the lorry in a horizontal position and has a rack 16a mounted along its full length which is engage by a toothed wheel of the motor 14. The other two track portions 9b, 9c are pivotally mounted on the fixed track portion 9a, one at each end, in such a manner that they may swing down from an upright position to a horizontal position in which they make end to end contact with the fixed track portion 9a. Each of the pivotal track portions 9b, 9c are provided with racks 16b, 16c respectively which extend along the track portions 9b, 9c from the ends nearest the fixed track portion 9a. When the pivotal track portions 9b, 9c are swung into their horizontal positions, so as to connect end to end with the fixed track portion 9a, the racks 16b, 16c on each of the pivotal track portions 9b, 9c also connect end to end with the rack 16a of the fixed track portion 9a, to thereby form a continuous rack and track extending outwardly from the side of the lorry 1, along which the framework 6 can travel.

In order to move the pivotal track portions 9b, 9c into their horizontal positions or back into their vertical positions, the pivotal track portion not to be moved is locked in its vertical position and the actuator 31 is activated to either push the non-locked pivotal track portion into its horizontal position, or pull it back up into its vertical position.

The unloading of a container 2 to the right of the lorry 1 will now be described, it being appreciated that unloading to the left will be carried out in a corresponding manner.

Firstly, the front and rear support arms 28 are extended outwardly to the side of the lorry 1. All four of the supporting legs 29 are then extended downwardly until the stabilizing feet 30 firmly contact the ground. This ensures that the lorry 1 is fully stabilized and will not lean or tip over. These operations and all other operations can be controlled by the driver using a hand-held control unit 32.

Next, the two right-side pivotal track portions 9b are unlocked and swung down by their respective actuators 31 into their horizontal positions, where their ends contact with the ends of the fixed track portions 9a, to form a continuous track for the framework 6 to move along.

The container 2 is then unbolted from the support bars 3 by removing the fastening bolts 4, and the hydraulic lifting mechanism is actuated until the container 2 is fully supported by the framework 6. The motors 14, at each end of the framework 6, are started and the framework 6 moves along the track portions 9a, 9b, due to the engagement of the toothed wheels on the motors 14 with the racks 16a, and 16b. When the container 2 is clear of the lorry wheel base 10, the lifting mechanism is once again actuated and the container 2 is lowered to the ground. The right hand guide rollers 24 are then swung into their vertical positions clear from the container 2. The chains 7 are detached from the container 2 and rewound into the framework 6 by the lifting mechanism 20. The framework 6 is moved back, using the motors 14, to its original position on the fixed track portions 9a. The pivotal track portions 9b are then pulled back up into their original vertical positions by the actuators 31, where they restrain the framework 6 from moving. Finally, the support legs 29 are retracted and the support arms 28 withdrawn back into their normal position, which in this case is beneath the fixed track portions 9a.

With the container 2 thus unloaded, the lorry 1 is free to deliver a further container, whilst the container which has been unloaded may be loaded with goods, furniture etc, ready for transport.

When being loaded, the lorry 1 is positioned next to the container 2 and the supporting arms 28 and track portions 9b are extended so that they lie to either end of the container 2 as during unloading. The framework 6 is then moved out along the track portions 9b to straddle the container 2, making sure that the guide rollers 24 are in their vertical positions clear of container 2. The chains 7 are lowered from the framework 6, and attached to the bottom corners of the container 2. The guide rollers 24 are swung into position either side of the right-hand vertical side edges 2a of the container walls and the container 2 is lifted into the framework 6. As the container 2 is lifted, it engages the guide rails 23 through the spreader bars 22. The guide rails 23 align the container 2 with the framework 6 so that when it is moved back over the wheel base 10, it is correctly positioned, in its lengthwise direction, to be lowered onto the lorry 1. Thus, the use of the guide rails 23, allow the lorry driver greater flexibility as to the positioning of the lorry 1 in relation to the container 2, since the container 2 is brought into alignment with the framework 6, even if the lorry 1 is slightly mispositioned.

The motors 14 may be servo-controlled to ensure that they move the two ends of the framework 6 along the tracks at the same speed. Also, each motor may be provided with a micro-switch and sensing circuitry which senses when the framework 6 has reached the end of the track portions 9b or 9c and switches the motors 14 off. In order to prevent the container 2 from being jerked to a halt, the sensing circuitry may be used to gradually reduce the speed at which the motors 14 drive the framework 6, as the framework 6 approached the end of the track portions 9b or 9c. These features may also be provided for when the framework 6 is moved back into the centre position from a side position.

The provision of the guide rails 23 and guide rollers 24 and the servo-control of the motors 14 is particulary advantageous when the container 2 is being loaded or unloaded on a slope, since the guide rails 23 and guide rollers 24 prevent the container 2 from swinging around, and the servo-control of the motor prevents one end of the framework 6 from being moved further than the other end because of the front and rear track portions 9b or 9c being at different gradients.

It can be seen that the present invention provides apparatus for quickly and efficiently loading or unloading a container onto or off of a vehicle from either side, without requiring the use of any means separate from the vehicle, and which allows the movement of the container 2 to be controlled at all times, preventing any swinging of the container 2 that could cause damage to the goods held inside.

There are many different ways in which the above embodiment could be modified. For example, the supporting arms, supporting legs and the pivotal tracks could be made to swing outwardly in a horizontal plane instead of swinging in a vertical plane or extending straight out; the container could be raised from its top instead of its bottom; all of the movements could be made manually instead of using hydraulics or electrics; the raising and lowering means could comprise a winding mechanism instead of a hydraulic mechanism; and the pivotal tracks could be raised or lowered by individual actuators.

Further, instead of having a framework 6 as described above, the container 2 could be held separately at its front and rear ends by independent means. Such a system is envisaged to be particularly useful where heavy containers are being loaded or unloaded in which case separate lifting means may be needed at each end.

The containers themselves could be of many different types, for many different uses, and may be adapted to store goods for long periods, i.e. by being ventilated. The container could also be in the form of a tank housed in a rectangular supporting frame.

It is also contemplated that a load supporting base could be used instead of a container, wherein the goods for transportation would be loaded on top of the base. These load supporting bases are well known and may be used by themselves or in conjunction with sidewalls, side struts and coverings, or other such means for restraining and protecting the goods. Pallets could also be used.

The lorry itself may be articulated, in which case of course the above described apparatus can be mounted on the trailer.

## Claims

1. A vehicle for transporting a container or a load supporting base, wherein said vehicle is provided with:

track means, provided adjacent each end of the vehicle and arranged to extend, in use, substantially horizontally outwardly from a side of said vehicle;

ground engaging support means for supporting said track means in said substantially horizontal position;

frame means movable along said track means for conveying a container or base between a position over said vehicle and a position to one side of said vehicle;

and lifting means provided on said frame means for raising and lowering said container or base.

2. A vehicle according to claim 1, wherein said track means comprises front and rear fixed horizontally extending track portions mounted on said vehicle, and front and rear pivotal track portions mounted adjacent the respective fixed track portions and pivotable between an upright position and a substantially horizontal position.

3. A vehicle according to claim 2, wherein opposed pivotal track portions are provided adjacent each end of the fixed track portions so that a container or base can be loaded or unloaded from either side of the vehicle, actuating means being provided for moving one of each said pair of opposed track portions into its upright or horizontal position, whilst said other one of said pair of opposed track portions is held in its upright position.

4. A vehicle according to any preceding claim, wherein said support means comprises support arms extendable outwardly from said vehicle to a position in which said arms will, in use, lie beneath and support the track means in its horizontal position, said arms being provided with ground engaging support legs adjacent their free ends.

5. A vehicle according to any preceding claim, wherein said frame means comprises a framework which straddles said container or base in the lengthwise direction of said vehicle.

6. A vehicle according to any of claims 1 to 4, wherein said frame means comprises a pair of independent front and rear supporting structures, each said supporting structure having its own lifting means.

7. A vehicle according to any preceding claim, wherein said frame means is moved along said track means by motors mounted at each end of said frame means, said motors rotating toothed wheels mounted thereon which wheels engage with rack means mounted on said track means.

8. A vehicle according to claim 7, wherein said motors are controlled so that the front and rear ends of said frame means are driven at substantially the same speed.

9. A vehicle according to claim 7 or 8, wherein sensing means are provided which senses when said frame means is approaching the end of said track means, said sensing means gradually reducing the speed at which said frame means is driven by said motors as said frame means nears the end of said track means, said sensing means further stopping said motors from driving said frame means when said frame means reaches the end of said track means.

10. A vehicle according to any preceding claim, wherein said lifting means comprises chains or cables running from a lifting mechanism, said container or base being suspended from said cables or chains when being conveyed by said frame means, and being retained in position on said vehicle by fastening means when said vehicle is moving.

11. A vehicle according to claim 10 for use with a container, wherein guide rails are provided on said frame means for correctly positioning said container in a lengthwise direction in relation to said frame means when in its raised position so that when said container is moved to a position over said vehicle it is correctly aligned with said vehicle.

12. A vehicle according to claim 10 or 11 for use with a container, wherein guide rollers are provided on said frame means, said guide rollers being movable to lie either side of the side wall vertical edges of said container to restrain it from swinging motion when being moved.

Fig.1

EP 0 422 894 A2

Fig.2

EP 0 422 894 A2

Fig.3

Fig.4